# EUROPEAN PATENT APPLICATION

(11) **EP 1 859 683 A1**
(43) Date of publication of application: **28.11.2007**
(21) Application number: 07108599.7
(22) Date of filing: 22.05.2007
(51) Int. Cl.: A23F 5/12, A23F 5/40, A47J 31/12

(54) **Coffee bag**

(30) Priority: 22.05.2006 NL 1031854
(71) Applicant: Drie Mollen Holding B.V., 5211 SH 's-Hertogenbosch (NL)
(72) Inventor: Waldus, Bert, 8448 PH Heerenveen (NL); van Hellenberg Hubar, Rolf Wilhelmus Henricus Bern, 5062 LP Oisterwijk (NL)
(74) Representative: Ketelaars, Maarten F.J.M.

(57) **Abstract**

The present invention relates to a coffee bag comprising a closed envelope that contains ground coffee and is permeable to water but does not let the ground coffee through, characterized in that the coffee bag also contains 0.1-15 wt-% of water-soluble coffee extract, calculated on the amount of ground coffee present in the coffee bag.

The use of the water-soluble coffee extract ensures that the coffee made with the coffee bag has a balanced aroma which is comparable to that of normal filter coffee.

The invention also relates to a process for making coffee in which hot water is made to percolate through a coffee bag according to the present invention.

Another aspect of the invention relates to an assembly comprising a coffee machine with a container, with a coffee bag according to the present invention inside it.

## Description

### Technical field of the invention

The present invention relates to a coffee bag that contains ground coffee and is suitable for use in a device that makes cups of coffee in a short time by extracting the contents of the coffee bag using hot water under a relatively low excess pressure (e.g. less than 3 bar).

### Background of the invention

Coffee bags that contain ground coffee and are suitable for such use are already known in the prior art, e.g. from US Patent No. 3,620,155. The use of such coffee bags in coffee machines such as Severin® KA 5910 and Bosch® TKP3013, where a pump-based pressure system (2-2.5 bar at most) ensures a brief contact time between the hot water and the ground coffee, offers the advantage that one or two cups of coffee can be made in a simple way and in a short space of time.

However, the quality of the coffee made in this way leaves something to be desired. Thus, the Applicant's consumer tests have shown that the flavour of the coffee made using the devices mentioned above is not as rich and not as balanced as that of ordinary filter coffee.

The aim of the present invention is therefore to improve the flavour of coffee made in this way without losing the convenience, i.e. the simplicity and speed, of this method of making coffee.

### Summary of the invention

The inventors have now surprisingly found that the flavour of coffee made by the relatively low-pressure extraction of ground coffee from a coffee bag can be improved considerably by introducing not only ground coffee into the coffee bag but also 0.1-15 wt-% of water-soluble coffee extract, where said percentage is calculated on the amount of ground coffee present. It has been found that the use of this amount of water-soluble coffee extract supplements precisely those aspects of coffee aroma that are under-represented in coffee obtained by extracting a coffee bag under an excess pressure of less than 3 bar. The use of the coffee extract therefore makes it possible to obtain coffee made with a coffee bag that has a balanced aroma comparable to that of ordinary filter coffee.

So-called instant coffee is an example of a water-soluble coffee extract that can be used according to the invention. It has been found surprisingly that coffee obtained using a coffee bag filled with a mixture of ground coffee and a small amount of instant coffee has a better flavour than either coffee made with a coffee bag containing only ground coffee or coffee prepared by dissolving instant coffee in hot water.

### Detailed description of the invention

A first aspect of the present invention relates to a coffee bag comprising a closed envelope that contains ground coffee and is permeable to water but does not let the ground coffee through, characterized in that the coffee bag also contains 0.1-15 wt-% of water-soluble coffee extract, calculated on the amount of ground coffee present in the coffee bag.

The term "ground coffee" is used in this document to denote the product that can be obtained by grinding roasted coffee beans.

The term "water-soluble coffee extract" is used in this document to denote an extract of roasted coffee beans, whether ground or not, which can be fully dissolved in water at a temperature of at least 80°C. Such a coffee extract can be obtained by extracting roasted and preferably ground coffee beans with a suitable solvent. The water-soluble coffee extract is preferably obtained by extraction with an aqueous medium and/or by means of steam distillation. The coffee extract is especially obtained by extraction with an aqueous medium. The term "aqueous medium" is used to denote an essentially liquid medium that mainly consists of water. The aqueous medium preferably contains at least 70 wt-%, especially at least 85 wt-%, and most preferably at least 95 wt-% of water.

The coffee bag according to the present invention preferably contains at least 0.3 wt-%, particularly preferably at least 0.5 wt-% and especially at least 0.7 wt-% of the water-soluble coffee extract, calculated on the amount of ground coffee present. The amount of water-soluble coffee extract preferably does not exceed 10 wt-% and especially does not exceed 7 wt-%, calculated on the amount of ground coffee present.

The water-soluble coffee extract used according to the present invention preferably mainly consists of components that are not particularly volatile. The water-soluble coffee extract normally contains no more than 20 wt-% and preferably no more than 15 wt-% of volatile components with a boiling point of 100°C or less.

The water-soluble coffee extract is advantageously used in powder form and is preferably a spray-dried and/or freeze-dried coffee extract. The particle size of the coffee extract in powder form affects the quality of the coffee made with the coffee bag. Good results are obtained if the water-soluble coffee extract in powder form has a mass-weighted average particle size of 30-800 µm. This average particle size is preferably in the range of 50-600 µm and especially in the range of 100-500 µm.

As mentioned before, the use of the water-soluble coffee extract in the coffee bag ensures that coffee can be obtained having a quality that is comparable to that of filter coffee. This may be explained by the different extraction conditions that are used when making filter coffee in comparison to coffee made with a coffee bag (see Dutch Patent NL-C No. 1007171). When coffee is made using a coffee bag, the time of contact between the hot water and the ground coffee is relatively short. As a result, components that are less water-soluble or components that are not located on the surface of the coffee particles are extracted less well by the bag method than by the filter method. By supplementing precisely those flavour compounds that are extracted less well when coffee bags are used, it is possible to correct the aroma profile of the coffee thus made in such a way that the resulting coffee aroma largely matches the aroma profile of filter coffee. An important aroma compound that is preferably supplemented by the water-soluble coffee extract is (E)-β-damascenone. Particular preference is given to a water-soluble coffee extract comprising at least 0.3 mg/kg, particularly at least 1 mg/kg and especially at least 2 mg/kg of (E)-β-damascenone. The content of (E)-β-damascenone in the water-soluble coffee extract normally does not exceed 100 mg/kg.

The quality of the coffee made with the aid of the coffee bag according to the invention depends on the particle size of the ground coffee to a considerable extent. If the particles are very large, extraction will be insufficient, and a weak and watery cup of coffee is obtained. If the particles are very small, they will offer a greater resistance and clog up the pores of the envelope, as a result of which the extraction process is again not optimal, and once more a weak and watery cup of coffee is obtained. The coffee bag according to the invention gives good results if the ground coffee present in it has a mass-weighted average particle size of 40-800 µm and preferably 100-600 µm.

The ground coffee and the water-soluble coffee extract can be introduced into the coffee bag in the form of a mixture, but also as separate components, for example each placed in a separate compartment of the envelope. The best results are obtained when the water-soluble coffee extract and the ground coffee are homogenously mixed together. This variant is therefore the preferred solution.

The envelope of the coffee bag can theoretically be made of any material that is permeable to water but does not let the contents of the coffee bag through, and which is furthermore water resistant and does not contain any toxic constituents. The envelope is preferably made of a material chosen from the group consisting of paper, textiles (wovens) and combinations thereof. Paper - and especially filter paper - is the most preferred of these materials.

An important property of the water-soluble coffee extract is the speed with which said extract dissolves in hot water. Particularly good results can be obtained if the coffee extract dissolves in hot water very quickly. The coffee bag according to the invention therefore preferably contains a water-soluble coffee extract that is characterized in that 2.5 grams of this extract can fully dissolve in 200 ml of water at 90°C within 10 seconds and especially within 5 seconds when stirred by hand.

The advantages of the present invention are particularly manifest in the case of coffee bags that are suitable for making one or two cups of coffee. For this reason, the combined amount of ground coffee and water-soluble coffee extract in the envelope of the coffee bag is preferably between 4 and 20 grams and especially between 4 and 10 grams.

The quality of the ground coffee and coffee extract present in the coffee bag may deteriorate during storage as a result of oxidation and/or moisture uptake. In order to ensure that the product remains stable during storage, the coffee bag is preferably placed in a closed airtight pack that is filled with an oxygen-deficient gas, preferably nitrogen.

The envelope of the coffee bag preferably comprises a top layer and a bottom layer that are joined together near their longitudinal edges. Particularly preferably, the envelope has a disc-shaped top layer and a disc-shaped bottom layer, and the part of the top layer and the part of the bottom layer that are joined to each other form an annular sealed joint.

Another aspect of the invention relates to a process for making hot coffee in which hot water is made to percolate through a coffee bag as described above. Preference is given to a process in which the percolation is carried out under a pressure that lies between 0.8 and 3 bar and at a temperature that lies between 70 and 95°C and preferably between 75 and 90°C. A process in which the percolation is carried out under a pressure of between 1.0 and 2.5 bar is preferred in particular.

Particularly good results can be obtained with the process of the present invention if the percolation is carried out for 15-60 seconds, using hot water at a flow rate of 2-10 ml/s and preferably 3-6 ml/s for the percolation. The time needed to collect 80% of the hot water supplied in the form of coffee is chosen here as the total time of percolation. The speed of percolation is equal to the average percolation speed during this period.

Yet another aspect of the present invention relates to an assembly comprising:
- a coffee machine and
- a coffee bag as described above,
where the coffee machine comprises a container that has a first side and an opposite second side, between which the bag can be inserted, the first side of the container is provided with an outlet for the introduction of hot water, and the second side of the container is provided with a discharge tube for discharging the coffee formed in the container, and where the coffee machine is designed in such a way that hot water under pressure is supplied to the first side of the container during use, so that said supplied hot water is forced through the bag in order to extract the ground coffee in the bag and to dissolve the water-soluble coffee extract present in the bag, with the coffee thus formed flowing out of the container via the discharge tube.

In a preferred embodiment of the present invention, the coffee machine is set up for the introduction of the hot water under such a pressure that the pressure in the outlet of the inlet tube is above atmospheric pressure. An assembly in which the pressure in the outlet is below 2.5 bar is preferred in particular.

The present invention is further illustrated with the aid of the following examples.

### Example

Coffee bags were filled with 7 grams of ground coffee (mixture of Arabica and Robusta with the following particle-size distribution:
- 0.6 mm or more: 4-10 wt-%
- 0.3 mm-0.6 mm: 54-66 wt-%
- 0.125 mm-0.3 mm: 26-34 wt-% and
- 0.125 mm or less: 1-5 wt-%)
together with 0, 0.15, 0.25, 0.35, 0.5, 0.75 and 1.0 gram of instant coffee (PIIB Colombia, ex DEK, Hamburg, Germany). The envelope of the coffee bag consisted of two disc-shaped pieces of filter paper that were joined together at the edge by an annular sealed joint. The outside diameter of the coffee bag, including the sealed joint, was about 71 mm, while the inside diameter of the coffee bag was about 61 mm.

A Gustino® TKP3013 coffee machine made by Bosch® was used to make a cup of coffee with the different types of coffee bag. The coffee thus prepared was tested by an expert panel that rated the quality of the evaluated samples. The results showed that the addition of instant coffee can significantly improve the quality of the coffee obtained. In this case best results were obtained when 0.15-0.50 grams of instant coffee were added.

## Claims

1. Coffee bag comprising a closed envelope that contains ground coffee and is permeable to water but does not let the ground coffee through, **characterized in that** the coffee bag also contains 0.1-15 wt-% and preferably 0.3-10 wt-% of water-soluble coffee extract, calculated on the amount of ground coffee present in the coffee bag.

2. Coffee bag according to Claim 1, where the water-soluble coffee extract is a spray-dried and/or freeze-dried extract.

3. Coffee bag according to Claim 1 or 2, where the water-soluble coffee extract has a mass-weighted average particle size of 30-800 µm.

4. Coffee bag according to any one of the preceding claims, where the ground coffee has a mass-weighted average particle size of 40-800 µm.

5. Coffee bag according to any one of the preceding claims, where the water-soluble coffee extract and the ground coffee are homogeneously mixed together.

6. Coffee bag according to any one of the preceding claims, where the envelope is made of a material chosen from the group consisting of paper, textiles and combinations thereof.

7. Coffee bag according to any one of the preceding claims, **characterized in that** the combined amount of ground coffee and water-soluble coffee extract is between 4 and 20 grams.

8. Process for making hot coffee, in which hot water is made to percolate through a coffee bag according to any one of the preceding claims.

9. Process according to Claim 5, in which the percolation is carried out under a pressure that lies between 0.8 and 3 bar and at a temperature that lies between 70 and 95°C and preferably between 75 and 90°C.

10. Assembly comprising:
- a coffee machine and
- a coffee bag according to any one of Claims 1-7,
where the coffee machine comprises a container that has a first side and an opposite second side, between which the bag can be inserted, the first side of the container is provided with an outlet for the introduction of hot water, and the second side of the container is provided with a discharge tube for discharging the coffee formed in the container, and where the coffee machine is designed in such a way that hot water under pressure is supplied to the first side of the container during use, so that said supplied hot water is forced through the bag in order to extract the ground coffee in the bag and to dissolve the water-soluble coffee extract present in the bag, with the coffee thus formed flowing out of the container via the discharge tube.
